# EUROPÄISCHE PATENTANMELDUNG

(11) **EP 0 831 342 A2**
(43) Veröffentlichungstag der Anmeldung: **25.03.1998**
(21) Anmeldenummer: 97113036.4
(22) Anmeldetag: 29.07.1997
(51) Int. Cl.: G02B 6/12

(54) **Verfahren zum Herstellen eines oder mehrerer abgelöster optischer Wellenleiter**

(30) Priorität: 19.09.1996 DE 19638493
(71) Anmelder: SIEMENS AKTIENGESELLSCHAFT, 80333 München (DE)
(72) Erfinder: Schneider, Hartmut, Dr., 81927 München (DE)

(57) **Zusammenfassung**

Verfahren zum Herstellen eines abzulösenden Schichtengebildes (1), insbesondere ein optischer Wellenleiter, wobei auf einer Aussparungen (21) aufweisenden Oberfläche (20) das Schichtengebilde (1) so erzeugt wird, daß es lokal über jeder unter ihm liegenden Aussparung (21) nicht, sonst aber ganz mit der Oberfläche (20) verbunden wird, und wobei das so verbundene das Schichtengebilde (1) von der Oberfläche (20) abgelöst wird. Vorteil: Vermeidung von Brüchen aufgrund von Spannungen beim Ablösen. Anwendung bei Strahlumsetzern für Hochleistungslaser.

## Beschreibung

Die Erfindung betrifft ein Verfahren zum Herstellen eines oder mehrerer abgelöster Schichtengebilde, insbesondere optische Wellenleiter, nach dem Oberbegriff des Patentanspruchs 1.

Ein Verfahren der genannten Art ist aus der deutschen Patentanmeldung mit dem amtlichen Aktenzeichen 196 12 673.8 (GR 96 P 1328 DE) bekannt.

Bei diesem bekannten Verfahren wird auf die Oberfläche des Substrats eine Trennschicht aufgebracht. Auf die Trennschicht wird eine erste optische Mantelschicht eines optischen Wellenleiters aufgebracht, auf die wiederum eine optische Kernschicht dieses Wellenleiters aufgebracht wird.

Die Kernschicht wird so strukturiert, daß eine Anzahl voneinander getrennter, jeweils zwei entgegengesetzte stirnseitige Enden aufweisende streifenförmige Kernschichten auf der ersten Mantelschicht verbleiben, deren jede je einen Kern eines streifenartigen Wellenleiters zum Führen einer optischen Welle längs der Erstreckung zwischen den beiden stirnseitigen Enden definiert.

Auf die streifenförmigen Kernschichten und auf die freien Teilbereiche der ersten Mantelschicht zwischen den streifenförmigen Kernschichten wird eine zweite optische Mantelschicht derart aufgebracht, daß die streifenförmigen Kernschichten über ihrer ganzen Erstreckung zwischen den stirnseitigen Enden der Kernschicht vollständig von der ersten und zweiten Mantelschicht umgeben sind.

Danach wird ein Teil der zwischen den streifenförmigen Kernschichten befindlichen ersten und zweiten Mantelschicht derart entfernt, daß auf der Trennschicht eine Anzahl voneinander getrennter streifenartiger Wellenleiter verbleibt, deren jeder aus einer der streifenförmigen Kernschichten und einem diese Kernschicht auf der ganzen Erstreckung zwischen deren stirnseitigen Enden umgebenden optischen Mantel besteht, wobei die beiden stirnseitigen Enden dieser Kernschicht zugleich die beiden entgegengesetzten Enden dieses streifenartigen Wellenleiters sind.

Danach werden die streifenartigen Wellenleiter über ihrer ganzen Erstreckung zwischen ihren entgegengesetzten Enden durch Abätzen der Trennschicht von der Oberfläche des Substrats abgelöst, so daß das eine Ende jedes streifenartigen Wellenleiters frei wird und das andere Ende dieses Wellenleiters fest mit der Oberfläche des Substrats verbunden bleibt.

Das fest mit der Oberfläche des Substrats verbundene andere Ende jedes streifenartigen Wellenleiters ist bei dem bekannten Verfahren ein Ende, das mit einem fest mit der Oberfläche des Substrats verbundenen Schichtwellenleiter verbunden ist, der beim Ablösen der streifenartigen Wellenleiters von der Oberfläche des Substrats nicht mit abgelöst wird, sondern fest mit dem Substrat verbunden bleibt.

Durch die im Anspruch 1 angegebene Erfindung ist vorteilhafterweise ein Verfahren der eingangs genannten Art bereitgestellt, bei welchem der oder die Schichtengebilde, insbesondere Wellenleiter, in derart kontrollierter Weise von der Oberfläche des Substrats abgelöst werden können, daß beim Ablösen Brüche weitgehend vermieden werden können.

Der Erfindung liegt die Erkenntnis zugrunde, daß in der Regel aufgrund der unterschiedlichen Funktionalität von Substrat und Schichtengebilde, beispielsweise Wellenleiter Unterschiede in der Materialzusammensetzung und damit auch den thermischen Eigenschaften bestehen, so daß Substrat und Schichtengebilde gegeneinander verspannt sind. Diese Verspannung kann beim Ablösen des Schichtengebildes, beispielsweise Wellenleiters zum Bruch führen.

Es wurde erkannt, daß solche Verspannungen vermieden werden können, wenn die thermischen Ausdehnungskoeffizienten der zu trennenden Schichten möglichst aneinander angepaßt werden. Bei der Trennung werden dann nur geringe Spannungsenergien freigesetzt, die kaum zum vorzeitigen Reißen der Schichten führen können. Dies ist in der Regel jedoch schwer zu realisieren, so daß sich geringfügige Ausbrüche nur schwer vermeiden lassen.

Das erfindungsgemäße Verfahren ermöglicht vorteilhafterweise das gesteuerte Ablösen des Schichtengebildes, beispielsweise Wellenleiters vom Substrat unter kontrollierter Freisetzung der Spannungsenergie, so daß das Schichtengebilde bzw. der Wellenleiter problemlos auch dann von der Oberfläche des Substrats abgelöst werden kann, wenn Schichtengebilde bzw. Wellenleiter und Substrat gegeneinander verspannt sind.

Bevorzugterweise ist das erfindungsgemäße Verfahren zur Herstellung abgelöster Schichtengebilde in Form optischer Wellenleiter gemäß Anspruch 2 verwendet.

Die erfindungsgemäße Verwendung eines Substrats, dessen Oberfläche unter jedem der zu erzeugenden und abzulösenden Schichtengebilde bzw. Wellenleiter eine Anzahl Aussparungen aufweist, macht es möglich, daß eine vorhandene Spannungsenergie aufgrund einer Verspannung zwischen einem Schichtengebilde bzw. Wellenleiter und dem Substrat schrittweise von Aussparung zu Aussparung unter diesem Schichtengebilde Wellenleiter abgebaut werden kann, ohne daß es zu einem kritischen Spannungsstau kommt. Dabei besteht der besondere Vorteil, daß ein Eingriff in die für die Funktion wichtige Geometrie des Schichtengebildes bzw. Wellenleiters vollständig vermieden werden kann.

Besonders vorteilhaft ist dabei eine Oberfläche, bei der die Aussparungen unter einem zu erzeugenden und abzulösenden Wellenleiter nicht äquidistant oder von seinem anderen Ende in Richtung zu seinem einen Ende spärlicher werden, sondern, wie im Anspruch 3 angegeben, von seinem anderen Ende in Richtung zu seinem einen Ende dichter werden. Dichter werden in diesem Sinne bedeutet, daß unter dem zu erzeugenden und abzulösenden Schichtengebilde bzw. Wellenleiter der Abstand zwischen benachbarten Aussparungen in der Richtung von seinem anderen zu seinem einen Ende kleiner wird.

Im Sinne einer schrittweisen und nicht sprunghaften Ablösung eines Schichtengebildes bzw. Wellenleiters ist es vorteilhaft, wenn gemäß Anspruch 4 die Aussparungen kontinuierlich dichter werden, d.h. der Abstand zwischen benachbarten Aussparungen unter diesem Schichtengebilde bzw. Wellenleiter in der genannten Richtung kontinuierlich oder graduell abnimmt.

Zweckmäßig ist es auch, wenn Aussparungen in Form von quer zu einer Erstreckung des oder der zu erzeugenden und abzulösenden Schichtengebilde bzw. Wellenleiter verlaufenden Nuten verwendet werden (Anspruch 5). Solche Nuten können beispielsweise parallel zueinander verlaufen, sich aber auch kreuzen und ein Nutennetzwerk bilden.

Als besonders vorteilhaft hat es sich bei der erfindungsgemäßen Oberfläche erwiesen, wenn des oder die Schichtengebilde bzw. der oder die Wellenleiter durch Ätzen von der Oberfläche abgelöst werden (Anspruch 6). Beim Ablösen durch Ätzen erfolgt dort, wo die Aussparungen der Oberfläche dichter sind, ein früheres Ablösen von der Oberfläche als dort, wo die Aussparungen weniger dicht angeordnet sind. Entsprechendes gilt für ein Netzwerk aus sich kreuzenden Nuten in der Oberfläche. Weist das Netzwerk ein variables Raster auf, erfolgt dort, wo das Netzwerk engermaschig ist, ein früheres Ablösen als dort, wo das Netzwerk weitermaschig ist. Dadurch sind vorteilhafterweise die Richtung der Ablösung und die Geschwindigkeit der Ablösung zum voreinstellbaren Parameter geworden. Wenn, wie in dem Fall, daß unter einem Schichtengebilde bzw. Wellenleiter die Aussparungen von dessem anderen Ende in Richtung zu dessen einem Ende dichter wird, erfolgt beim Ätzen die Ablösung vom einen Ende in Richtung zum anderen Ende.

Das Ablösen durch Ätzen wird bevorzugter- und vorteilhafterweise so vorgenommen, wie es im Anspruch 7 angegeben ist. Auch das in Anspruch 8 angegebene Verfahren kann vorteilhaft angewendet werden.

Wesentlich ist in allen Fällen, daß beim Aufbringen des oder der Schichtengebilde auf die mit Aussparungen versehene erfindungsgemäße Oberfläche in jeder Aussparung ein Hohlraum bestehen bleibt, der bewirkt, daß das oder die Schichtengebilde lokal über jeder unter ihm oder ihnen liegenden Aussparungen nicht mit der Oberfläche verbunden wird. Dies kann erreicht werden, wenn eine Schicht des oder der Schichtengebilde aus einer Gasphase auf der Oberfläche abgeschieden wird (Anspruch 9). Bekannte derartige Verfahren sind das CVD-Verfahren und die Flammenhydrolyse. Es hat sich dabei erwiesen, daß die Flammenhydrolyse (10) besonders vorteilhaft ist.

Die Erfindung ist vorteilhafterweise bei Strahlumsetzern für Hochleistungslaser anwendbar.

Die Erfindung wird in der nachfolgenden Beschreibung anhand der Figuren am Beispiel von Schichtengebilden in Form optischer Wellenleiter näher erläutert. Es zeigen:
- Figur 1: in Draufsicht eine Wellenleiterstruktur aus mehreren voneinander getrennten, langgestreckt streifenartigen optischen Wellenleitern, die auf einer mit Aussparungen versehenen erfindungsgemäßen Oberfläche eines Substrats aufgebracht ist,
- Figur 2: einen Schnitt durch die Struktur nach Figur 1 längs der Schnittlinie I - I in Figur 1,
- Figur 3: einen anderen Schnitt durch die Struktur nach Figur 1 längs der Schnittlinie II - II in Figur 1,
- Figur 4: die Struktur nach Figur 1 in der gleichen Draufsicht aber nach dem teilweisen Ätzen der Oberfläche,
- Figur 5: einen der Figur 2 entsprechenden Schnitt durch die Struktur nach Figur 4 längs der Schnittlinie III - III,
- Figur 6: einen der Figur 3 entsprechenden anderen Schnitt durch die Struktur nach Figur 4 längs der Schnittlinie IV - IV,
- Figur 7: einen der Figur 3 entsprechenden Schnitt durch ein Substrats mit einer aussparungsfreien Oberfläche, die mit einer Ätzmaske bedeckt ist,
- Figur 8: den Schnitt nach Figur 7 nach dem Ätzen der Oberfläche,
- Figur 9: einen der Figur 7 entsprechenden Schnitt durch ein Substrat mit einer aussparungsfreien Oberfläche, die mit einer eine erfindungsgemäße Oberfläche mit Aussparungen definierenden Maskenschicht bedeckt ist,
- Figur 10: den Schnitt nach Figur 9 nach dem Ätzen der Oberfläche des Substrats,
- Figur 11: einen der Figur 3 entsprechenden Schnitt durch ein Substrat mit einer Aussparungen aufweisenden erfindungsgemäßen Oberfläche, auf der gerade eine Mantelschicht aus einer Gasphase abgeschieden wird,
- Figur 12: die Struktur nach Figur 1 in der gleichen Draufsicht, wobei jedoch die Trennschicht auf einer herkömmlichen, aussparungsfreien Oberfläche aufgebracht ist, und
- Figur 13: die Struktur nach Figur 8 in der gleichen Draufsicht aber nach dem teilweisen Abätzen der Trennschicht.

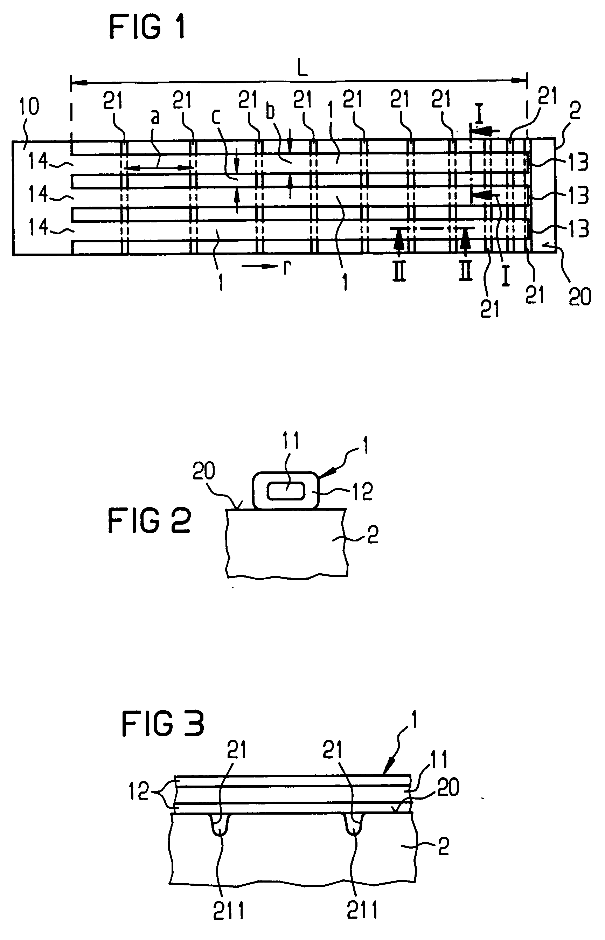

Die in den Figuren 1 bis 3 dargestellte Wellenleiterstruktur besteht aus drei auf der Oberfläche 20 des Substrats 2 aufgebrachten langgestreckt streifenartigen parallelen Wellenleitern 1, deren jeder nach Figur 1 in horizontaler Richtung eine Erstreckung L von einem Ende 13 bis zu einem zu diesem Ende 13 entgegengesetzten anderen Ende 14 aufeist.

Jeder streifenartige Wellenleiter 1 ist auf der Oberfläche 20 derart erzeugt, daß jeder Wellenleiter 1 eine sich zwischen seinen entgegengesetzten Enden 13 und 14 erstreckende optische Kernschicht 11 und einen diese Kernschicht 11 auf der ganzen Erstreckung L zwischen den Enden 13 und 14 vollständig umgebenden optischen Mantel 12 aufweist, wobei jeder dieser Wellenleiter 1 auf der ganzen Erstreckung L mit der Oberfläche 20 verbunden ist. Diese Schichtstruktur der Wellenleiter 1 ist ausschnitthaft den Figuren 2 und 3 zu entnehmen.

Nach den Figuren 2 und 3 ist jeder Wellenleiter 1 mit seiner Mantelschicht 12 unmittelbar auf der Oberfläche 20 aufgebracht.

Die Oberfläche 20 weist erfindungsgemäß unter jedem der streifenartigen Wellenleiter 1 eine Anzahl Aussparungen 21 auf, die beim dargestellten Beispiel die Form von Nuten 21, die zwischen den entgegengesetzten Enden 13 und 14 der streifenartigen Wellenleiter 1 senkrecht zu deren Erstreckung L verlaufen, aufweisen. Jede einzelne dieser Nuten 21 unterquert alle drei streifenartigen Wellenleiter 1.

Wesentlich ist, daß die Mantelschicht 12 so auf die Oberfläche 20 aufgebracht ist, daß die Nuten 21 in dieser Oberfläche 20 von der Mantelschicht 12 derart abgedeckt sind, daß in jeder Nut 21 ein Hohlraum 211 (siehe Figur 3) unter der Mantelschicht 12 bestehen bleibt, der bewirkt, daß die Mantelschicht 12 lokal über jeder unter ihr liegenden Nut 21 nicht mit der Oberfläche 20 verbunden ist, so daß auch jeder streifenartige Wellenleiter 1 über jeder Nut 21 lokal nicht mit dieser Oberfläche 20 verbunden ist.

Der Abstand a zwischen benachbarten Nuten 21 wird in der Richtung r vom anderen Ende 14 zum einen Ende 13 der streifenartigen Wellenleiter 1 graduell kleiner, so daß die Nuten 21 in dieser Richtung dichter werden. Anstelle der parallelen Nuten 21 allein kann auch ein nicht dargestelltes Netzwerk aus sich kreuzenden Nuten 21 verwendet werden, dessen Maschen enger werden.

Auf der Oberfläche 20 des Substrats 2 ist auf der Seite der fest mit der Oberfläche 20 verbunden bleibenden anderen Enden 14 der streifenartigen Wellenleiter 1 ein Schichtwellenleiter 10 aufgebracht, der fest mit der Oberfläche 20 des Substrats verbunden ist. Mit diesem Schichtwellenleiter 10 sind die anderen Enden 14 der streifenartigen Wellenleiter 1 fest verbunden.

Bei einem konkreten Ausführungsbeispiel haben die Wellenleiter 1 eine Breite b von 300µm, eine Längserstreckung L von 30mm und einen Abstand c von 300µm voneinander, der Abstand a zwischen benachbarten Nuten 21 beträgt maximal 50µm.

Zum Ablösen der streifenartigen Wellenleiter 1 von der Oberfläche 20 des Substrats 2 wird die insbesondere auch zwischen den Wellenleitern 1 freiliegende Oberfläche 20 mit einem Atzmittel geätzt, das nur das Material des Substrats 2, nicht aber die Wellenleiter 1 und den Schichtwellenleiter 10 angreift. der Schichtwellenleiter 10 fest mit dem Substrat 2 und die anderen Enden 14 der streifenartigen Wellenleiter 1 fest mit dem Schichtwellenleiter 10 verbunden bleiben.

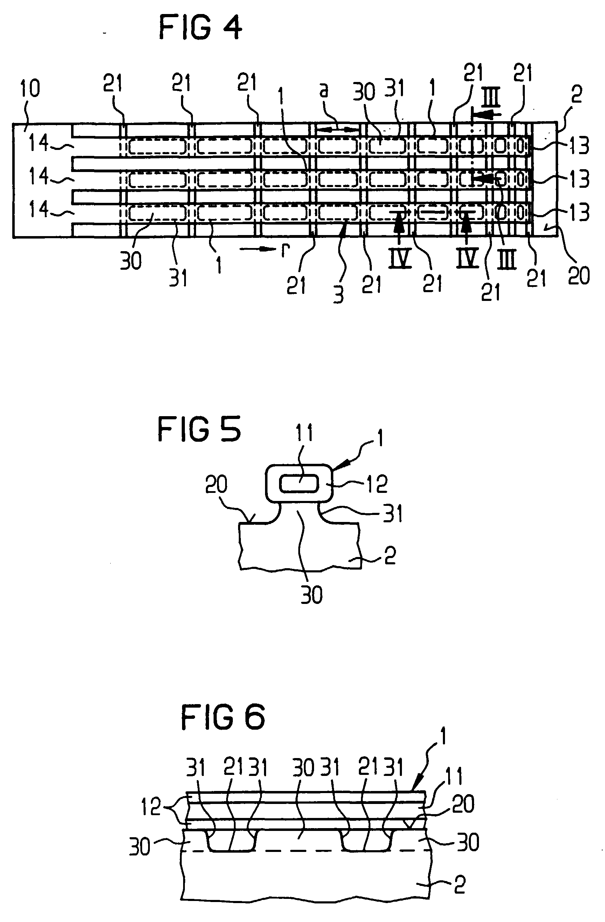

Das Ätzmittel dringt von den Nuten 21 auch in die unter den Wellenleitern 1 verbliebenen Hohlräume 211 ein, wodurch bewirkt wird, daß die Wellenleiter 1 nicht nur quer zu ihrer Längserstreckung L, sondern von jedem Hohlraum 211 auch in der Längserstreckung L unterätzt werden. D.h., das Unterätzen jedes Wellenleiters 1 erfolgt zwischen benachbarten Nuten 21 allseitig, so daß bei diesem Ätzen auf der Oberfläche 20 unter den Wellenleitern 1 mesaförmige erhabene Abschnitte 30 stehenbleiben, die in den Figuren 4 bis 6 dargestellt. Jeder dieser Abschnitte 30 von je einer Ätzfront 31 umgeben und begrenzt, die in Figur 4 gestrichelt und in den Figuren 5 und 6 durchgezogen dargestellt ist.

Jeder Wellenleiter 1 bleibt in jedem Abschnitt 30 mit der sonst geätzten Oberfläche 20 des Substrats 2 solange verbunden, bis dieser beim Weiterätzen so klein geworden ist, daß seine Verbindung mit dem Wellenleiter 1 gelöst wird.

Dort wo der Abstand a zwischen benachbarten Nuten 21 kleiner oder eine Masche eines Netzwerks aus Nuten 21 enger ist, wird der beim Ätzen zunächst stehengebliebene Abschnitt 30 früher als zwischen benachbarten Aussparungen 21 größeren Abstandes a oder in weiterer Masche so klein, daß seine Verbindung mit dem Wellenleiter 1 gelöst wird. Jeder Wellenleiter 1 löst sich daher zwischen benachbarten Aussparungen 21 kleineren Abstandes a oder in engerer Masche früher als zwischen Aussparungen 21 größeren Abstandes a oder in weiterer Masche von der Oberfläche 20 ab.

Beim Beispiel nach den Figuren 1 bis 6 löst sich nach weiterer Einwirkung des Ätzmittels auf die verbliebenen mesaförmigen Abschnitte 30 der Oberfläche 20 jeder streifenartige Wellenleiter 1 vom einen Ende 13 in Richtung zum anderen Ende 14, also entgegengestzt zur Richtung r, von der Oberfläche 20 des Substrats 2, da sich von den verbliebenen Abschnitten 30 zuerst die kleineren von den Wellenleitern 1 lösen und diese freigeben, und diese Abschnitte 30 sind umso kleiner, je näher sie dem einen Ende 13 der Wellenleiter 1 sind.

Die Verbindung des Schichtwellenleiters 10 mit dem Substrat 2 und die Verbindung der Enden 14 der Wellenleiter 1 mit dem Schichtwellenleiter 10 bleiben bestehen.

Bei dem erfindungsgemäßen Verfahren kann vorteilhafterweise durch Wahl des maximalen Abstandes zwischen den Aussparungen 21 oder der Größe der weitesten Masche eines Netzwerks aus sich kreuzenden Nuten 21 die Geschwindigkeit des Ablösens und durch die Richtung des Engerwerdens des Abstandes zwischen den Aussparungen 21 oder der Weite der Maschen die Richtung des Ablösens eingestellt werden, so daß Geschwindigkeit und Ablöserichtung zum einstellbaren Parameter geworden sind. Dadurch läst sich die Spannungsenergie schrittweise abbauen, ohne daß es zu einem kritischen Spannungsstau kommt. Dabei besteht der besondere Vorteil, daß ein Eingriff in die für die Funktion wichtige Geometrie der als Wellenleiter oder anderweitig verwendeten und von der Oberfläche des Substrats abzulösenden Schicht oder Schichtstruktur vermieden wird.

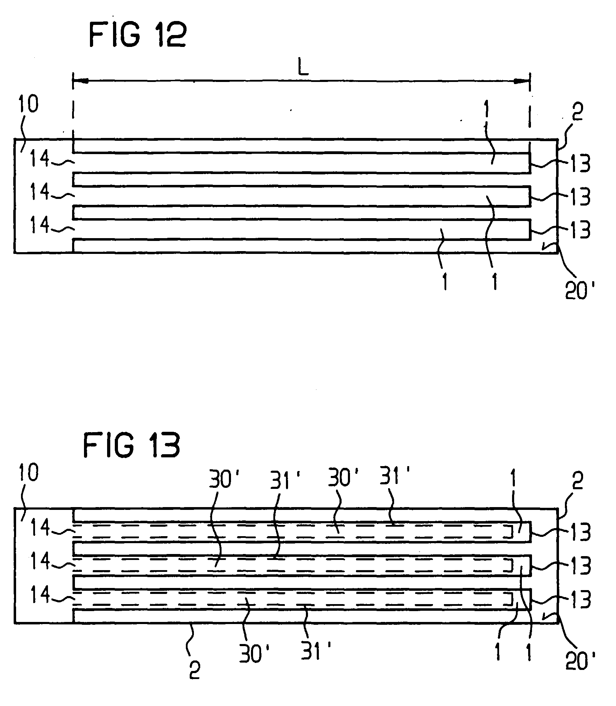

Zum Vergleich zeigen die Figuren 12 und 13 den Figuren 1 bzw. 4 entsprechende Darstellungen streifenartiger Wellenleiter 1, die auf einer aussparungsfreien Oberfläche 20' aufgebracht sind. Nach dem teilweisen Ätzen der Oberfläche 20' ist unter jedem streifenartigen Wellenleiter 1 je ein streifenförmiger erhabener Abschnitt 30' verblieben, der von einer gestrichelt dargestellten Ätzfront 31' begrenzt ist und sich beinahe über die ganze Erstreckung L der Wellenleiter 1 zwischen dem einen Ende 13 und anderen Ende 14 erstreckt. Beim weiteren Abätzen werden diese Abschnitte 30' senkrecht zur Erstreckung L immer schmaler, während sich ihre Länge längs der Erstreckung L unwesentlich ändert. Die Wellenleiter 1 bleiben daher bis zu ihrer Freigabe von der Oberfläche 20' fast auf ihrer ganzen Erstreckung L fest mit der Oberfläche 20' verbunden und lösen sich dann schlagartig auf der ganzen Erstreckung L von der Oberfläche 20', wobei Verspannungen zum Bruch führen können.

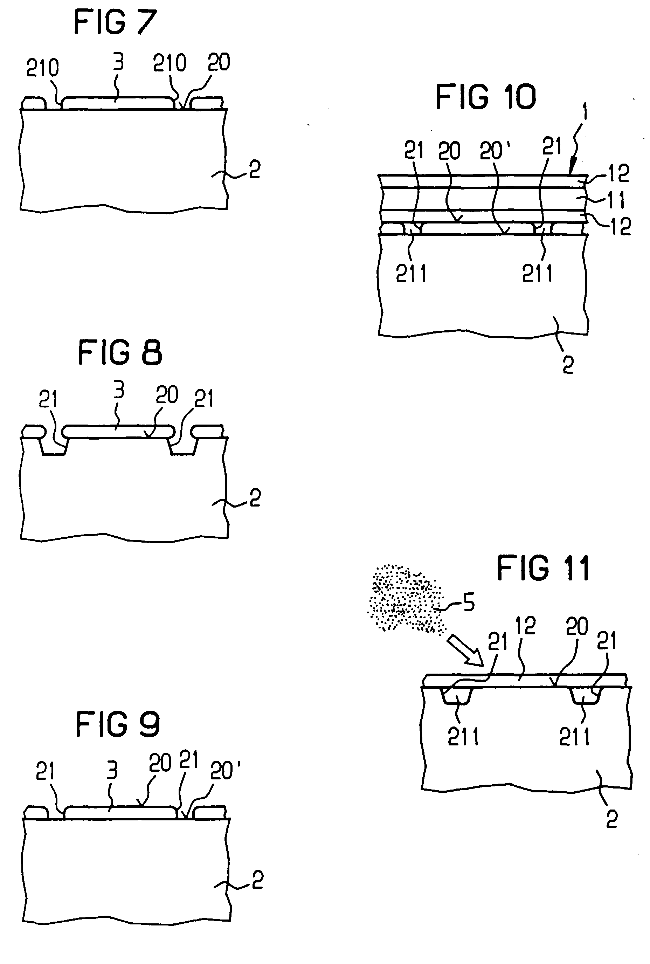

Zum Erzeugen der die Aussparungen 21 aufweisenden erfindungsgemäßen Oberfläche 20 wird beispielsweise die zunächst aussparungsfreie Oberfläche 20 mit einer Ätzmaske 3 abgedeckt, welche für die Aussparungen 21 vorgesehene Bereiche 210 der Oberfläche 20 freiläßt (Figur 7). Durch Ätzen der freigelassenen Bereiche 210 mit einem Ätzmittel, welches die Oberfläche 20, nicht aber die Ätzmaske 3 angreift, werden die Aussparungen 21 in der Oberfläche 20 erzeugt (Figur 8). Danach wird die Ätzmaske 3 von der Oberfläche 20 entfernt und auf der Oberfläche 20 das oder die Schichtengebilde 1 hergestellt werden.

Es kann auch so vorgegangen werden, daß ein Substrat 2 verwendet wird, dessen die Anzahl Aussparungen 21 aufweisende Oberfläche 20 die vom Substrat 2 abgekehrte Oberfläche einer auf eine aussparungsfreie Oberfläche 20' des Substrats 2 aufgebrachten Ätzmaskenschicht 3 ist, wobei die Aussparungen 21 durch die aussparungsfreie Oberfläche 20' des Substrats 2 freilassende Lücken der Ätzmaskenschicht 3 definiert sind und auf der Oberfläche 20 der Ätzmaskenschicht 3 das oder die Schichtengebilde 1 hergestellt werden (Figur 9). Die in den Aussparungen 21 freigelassene aussparungsfreie Oberfläche 20' des Substrats 2 wird mit einem Ätzmittel, welches die Oberfläche 20' des Substrats 2, nicht aber die Ätzmaskenschicht 3 und das oder die Schichtengebilde 1 angreift, geätzt, wobei die Ätzmaskenschicht 3 unterätzt wird (Figur 10). Danach werden die Ätzmaskenschicht 3 zusammen mit dem oder den darauf befindlichen Schichtengebilden 1 vom Substrat 2 abgelöst.

Zum Aufbringen einer Schicht, beispielsweise der Mantelschicht 12 eines Wellenleiters 1 nach den Figuren 1 bis 6 auf der Aussparungen 21 aufweisenden Oberfläche 20 des Substrats 2 derart, daß die Aussparungen 21 von dieser Schicht abgedeckt werden, aber in jeder Aussparung 21 ein Hohlraum 211 unter dieser Schicht bestehen bleibt, wird die abdeckende Schicht, vorteilhafterweise aus einer in Figur 7 angedeuteten Gasphase 5 auf der Oberfläche 20 des Substrats abgeschieden. Durch ein solches Verfahren kann gewährleistet werden, daß eine Aussparung 21 nicht mit dem Schichtmaterial der abzuscheidenden abdeckenden Schicht zugesetzt wird.

Zweckmäßigerweise werden nicht nur die unmittelbar abdeckende Schicht, sondern jede Schicht des Schichtengebildes 1, beim Beispiel nach den Figuren 1 bis 6 also die Schichten 11, 12 des Wellenleiters 1, aus einer Gasphase 5 abgeschieden.

Besonders vorteilhaft ist es, wenn zumindest die unmittelbar auf der Oberfläche 20 abzuscheidende Schicht, beispielsweise die Mantelschicht 12, mittels Flammenhydrolyse abgeschieden wird. Die Flammenhydrolyse hat sich bei einem in der am gleichen Tag eingereichten Anmeldung mit dem amtlichen Aktenzeichen ..... (GR 96 P 2173 DE) beschriebenen Verfahren zur Herstellung einer Kapillare, bei welchem eine in einer Oberfläche ausgebildete und die Kapillare definierende Nut mit einer Schicht derart abgedeckt wird, daß ein die Kapillare bildender Hohlraum in der Nut bestehen bleibt, als besonders wirksam erwiesen. Das dort in bezug auf die Nut beschriebene gilt in gleicher Weise bei den hier beschriebenen Aussparungen 21, so daß das in der Anmeldung .... ..... (GR 96 P 2173 DE) beschriebene Verfahren in seiner Gesamtheit auch bei dem hier beschriebenen Verfahren angewendet werden kann. Wie dort können auch hier Aussparungen 21 einer Breite von 2 bis 100 µm überdeckt werden.

Einsprechend ist es auch hier vorteilaft, für die unmittelbar abzuscheidende Schicht und jede mittels Flammenhydrolyse oder sonst aus einer Gasphase abzuscheidende Schicht ein Material auf der Basis von SiO₂, das vorzugsweise zu mehr als 60 mol% aus SiO₂ besteht, zu verwenden, vorzugsweise ein Material auf der Basis von SiO₂, das mit zumindestens einem Stoff aus der Stoffgruppe TiO₂, ZrO₂, ZnO, MgO, As₂O₃, Sb₂O₅, Bi₂O₃ und/oder SnO₂ dotiert ist. Solche Schichten werden als pöröse Schichten abgeschieden. Weist eine solche abgeschiedene Schicht eine hinreichende Dicke von beispielsweise mehr als 10 µm sowie hohe Gasviskosität auf, so läßt sie sich bei vorsichtiger Beheizung bei einer Temperatur von über 900°C nach der Abscheidung so zum klaren Glas sintern, daß überdeckte Aussparungen 21 nicht aufgefüllt werden, wobei tiefere Aussparungen 21 günstiger sind als weniger tiefe. Auch ist es günstig, eine Schicht durch einen Partikelstrom aus der Gasphase 5 abzuscheiden, der vorzugsweise unter einem flachen Winkel von beispielsweise 25° bis 30° zur Oberfläche 20 des Substrats 2 gerichtet ist.

Wenn die unmittelbar auf der Oberfläche 20 abzuscheidende Schicht und andere Schichten des Schichtengebildes 1 aus einem Material auf der Basis von SiO₂ sind, besteht das Substrat 2 vorteilhafterweise aus Si, Al₂O₃ und/oder einem Material auf der Basis von SiO₂, da diese Materialien thermomechanisch mit dem Material der abzuscheidenden Schicht und anderen Schichten des Schichtengebildes 1 verträglich sind, so daß Verspannungen klein gehalten werden können. Das Ätzen der Oberfläche 20 des Substrats 2 kann in diesem Fall mit KOH-Lösung vorgenommen werden.

Günstig wirkt es sich aus, wenn das Schichtengebilde 1 zwischen benachbarten Aussparungen 21 ausreichend durch die dazwischenliegende Oberfläche 20 des Substrats 2 gestützt ist. Das Verhältnis F_{g}/F zwischen der Fläche F_{g} der Aussparungen 21 und der Gesamtfläche F der Oberfläche 20 sollte kleiner als 0,5 sein.

Zähe SiO₂-Gläser mit geringem Dotierstoffanteil sind für das Schichtengebilde 1 günstig, weil die eine oder mehreren Schichten 11, 12 dieses Gebildes 1 weniger leicht absinken.

Die Erfindung ist in erster Linie zur Herstellung abgelöster Wellenleiter, insbesondere für Hochleistungslaser, gerichtet, sie kann jedoch ebensogut zur Herstellung anderer abgelöster Schichtengebilde, die keine Wellenleiter sind, verwendet werden. Jedes solche Schichtengebilde kann beispielsweise aus einer einzelne Schicht, einem Schichtenstapel oder einer komplizierteren Schichtstruktur bestehen.

## Patentansprüche

1. Verfahren zum Herstellen eines oder mehrerer voneinander getrennter, jeweils aus zumindest einer Schicht (12) bestehender Schichtengebilde (1), insbesondere ein oder mehrere optische Wellenleiter, auf der Oberfläche (20) eines Substrats (2) derart, daß jedes Schichtengebilde (1) von einem bestimmten Ende (13) des Schichtengebildes (1) bis zu einem zu diesem Ende (13) entgegengesetzten und fest mit der Oberfläche (20) verbundenen anderen Ende (14) des Schichtengebildes (1) von der Oberfläche (20) abgelöst ist, so daß das Schichtengebilde (1) gegen das feste andere Ende (14) beweglich ist, wobei
- auf der Oberfläche (20) das oder die Schichtengebilde (1) derart erzeugt werden, daß
- jedes Schichtengebilde (1) auf seiner von seinem einen Ende (13) bis zu seinem festen anderen Ende (14) reichenden ganzen Erstreckung(L) mit der Oberfläche (20) verbunden ist, und daß
- ein so erzeugtes und auf seiner ganzen Erstreckung(L) mit der Oberfläche (20) verbundenes Schichtengebilde (1) zusammen mit seinem einen Ende (13) auf dieser ganzen Erstreckung(L) von der Oberfläche (20) abgelöst wird,
**dadurch gekennzeichnet,** daß
- ein Substrat (2) verwendet wird, dessen Oberfläche (20) unter jedem der zu erzeugenden und abzulösenden Schichtengebilde (1) eine Anzahl Aussparungen (21) aufweist, daß
- auf dieser Oberfläche (20) der oder die auf ihrer ganzen Erstreckung (L) mit der Oberfläche (20) verbundenen Schichtengebilde (1) so hergestellt werden, daß ein Schichtengebilde (1) lokal über jeder unter ihm liegenden Aussparung (21) nicht mit der Oberfläche (20) verbunden wird, und daß
- ein derart auf seiner ganzen Erstreckung (L) mit dieser Oberfläche (20) verbundenes Schichtengebilde (1) auf dieser ganzen Erstreckung(L) von der Oberfläche (20) abgelöst wird.

2. Verfahren nach Anspruch 1, **dadurch gekennzeichnet,** daß
- auf der Oberfläche (20) das oder die voneinander getrennten Schichtengebilde (1) in Form optischen Wellenleiter erzeugt werden, derart, daß jeder Wellenleiter (1)
- eine sich zwischen seinen entgegengesetzten Enden () erstreckende optische Kernschicht (11) und
- einen sich-zwischen diesen Enden (13, 14) erstreckenden und die Kernschicht (11) auf der ganzen Erstreckung () zwischen diesen Enden () vollständig umgebenden optischen Mantel (12) aufweist, daß
- auf der Oberfläche (20) der oder die auf ihrer ganzen Erstreckung (L) mit der Oberfläche (20) verbundenen Wellenleiter (1) so hergestellt werden, daß ein Wellenleiter (1) lokal über jeder unter ihm liegenden Aussparung (21) nicht mit der Oberfläche (20) verbunden wird, und daß
- ein derart auf seiner ganzen Erstreckung (L) mit dieser Oberfläche (20) verbundener Welleneleiter (1) auf dieser ganzen Erstreckung (L) von der Oberfläche (20) abgelöst wird.

3. Verfahren nach Anspruch 1 oder 2, **dadurch gekennzeichnet,** daß die Aussparungen (21) unter einem zu erzeugenden und abzulösenden Schichtengebilde (1) von seinem anderen Ende (14) in Richtung (r) zu seinem einen Ende (13) dichter werden.

4. Verfahren nach Anspruch 3, **dadurch gekennzeichnet,** daß die Aussparungen (21) kontinuierlich dichter werden.

5. Verfahren nach einem der vorhergehenden Ansprüche, **dadurch gekennzeichnet,** daß Aussparungen (21) in Form von quer zu einer Erstreckung des oder der zu erzeugenden und abzulösenden Schichtengebildes (1) verlaufenden Nuten verwendet werden.

6. Verfahren nach einem der vorhergehenden Ansprüche, **dadurch gekennzeichnet,** daß das oder die Schichtengebilde (1) durch Ätzen von der Oberfläche (20) abgelöst werden.

7. Verfahren nach Anspruch 6, **dadurch gekennzeichnet,** daß die aussparungsfreie Oberfläche (20) des Substrats (2) mit einer Ätzmaske (3) abgedeckt wird, welche für die Aussparungen (21) vorgesehene Bereiche (210) der Oberfläche (20) freiläßt, daß durch Ätzen der freigelassenen Bereiche (210) mit einem Ätzmittel, welches die Oberfläche (20) des Substrats (2), nicht aber die Ätzmaske (3) angreift, die Aussparungen (21) in der Oberfläche (20) erzeugt werden, und daß danach die Ätzmaske (3) von der Oberfläche (20) des Substrats (2) entfernt und auf der Oberfläche (20) das oder die Schichtengebilde (1) hergestellt werden.

8. Verfahren nach Anspruch 6, **dadurch gekennzeichnet,** daß
- ein Substrat (2) verwendet wird, dessen die Anzahl Aussparungen (21) aufweisende Oberfläche (20) die vom Substrat (2) abgekehrte Oberfläche einer auf eine aussparungsfreie Oberfläche (20') des Substrats (2) aufgebrachten Ätzmaskenschicht (3) ist, wobei die Aussparungen (21) durch die aussparungsfreie Oberfläche (20') des Substrats (2) freilassende Lücken der Ätzmaskenschicht (3) definiert sind, daß
- auf der Oberfläche (20) der Ätzmaskenschicht (3) das oder die Schichtengebilde (1) hergestellt werden und daß durch Ätzen der in den Aussparungen (21) freigelassenen aussparungsfreien Oberfläche (20') und Unterätzen der Ätzmaskenschicht (3) mit einem Ätzmittel, welches die Oberfläche (20') des Substrats (2), nicht aber die Ätzmaskenschicht (3) und das oder die Schichtengebilde (1) angreift, die Ätzmaskenschicht (3) zusammen mit dem oder den darauf befindlichen Schichtengebilden (1) vom Substrat (2) abgelöst werden.

9. Verfahren nach einem der vorhergehenden Ansprüche, **dadurch gekennzeichnet,** daß zur Herstellung des oder der Schichtengebilde (1) auf der die Aussparungen (21) aufweisenden Oberfläche (20) des Substrats (2) so, daß ein Schichtengebilde (1) lokal über jeder unter ihm liegenden Aussparung (21) nicht mit der Oberfläche (20) verbunden wird, eine Schicht (12) des Schichtengebildes (1) aus einer Gasphase (5) auf der Oberfläche (20) abgeschieden wird.

10. Verfahren nach Anspruch 7, **dadurch gekennzeichnet,** daß die aus der Gasphase (5) abzuscheidende Schicht (12) des Schichtengebildes (1) mittels Flammenhydrolyse abgeschieden wird.
